Europäisches Patentamt

European Patent Office

Office européen des brevets

(11) Publication number: **0 337 787 B1**

# EUROPEAN PATENT SPECIFICATION

(45) Date of publication of patent specification: **21.06.95**    (51) Int. Cl.⁶: **B60C 1/00**, B60C 11/00, B60C 11/18

(21) Application number: **89303690.5**

(22) Date of filing: **13.04.89**

(54) **Pneumatic tire.**

(30) Priority: **13.04.88 JP 92296/88**
**19.05.88 JP 123686/88**
**24.05.88 JP 127669/88**
**13.06.88 JP 146649/88**

(43) Date of publication of application:
**18.10.89 Bulletin 89/42**

(45) Publication of the grant of the patent:
**21.06.95 Bulletin 95/25**

(84) Designated Contracting States:
**CH DE ES FR GB IT LI LU**

(56) References cited:
**EP-A- 0 067 111**
**DE-A- 3 703 480**
**DE-B- 1 194 721**
**GB-A- 2 044 191**
**US-A- 4 249 588**

**PATENT ABSTRACTS OF JAPAN vol. 10, no. 191 (M-495)(2247) 04 July 1986,& JP-A-61 36003 (SUZUKI MOTOR CO. LTD.) 20 February 1986,**

(73) Proprietor: **Bridgestone Corporation**
**1-1, Kyobashi 1-Chome**
**Chuo-Ku**
**Tokyo 104 (JP)**

(72) Inventor: **Yamaguchi, Kojiro**
**4-1-402, Ogawahigashi-cho**
**3-chome**
**Kodaira-shi**
**Tokyo (JP)**
Inventor: **Takusagawa, Takashi**
**14-13, Higashioume 4-chome**
**Oume-shi**
**Tokyo (JP)**

(74) Representative: **Whalley, Kevin et al**
**MARKS & CLERK,**
**57-60 Lincoln's Inn Fields**
**London WC2A 3LS (GB)**

## Description

The present invention relates to a pneumatic tire, and more specifically to a pneumatic tire having good wear resistance in summer (including spring and autumn) without deteriorating steerability and heat durability and further having good drivability, braking ability and steerability on icy and snowy roads in winter. In addition, the present invention relates in particular to a pneumatic tire which can improve riding comfortability and road noise and further anticrack resistance at tire groove bottoms.

In general, studless tires and foam rubber tires having foam rubber on the tread are used to prevent dust pollution and road damage as all-season tires suitable for use in travelling both on icy and snowy roads in winter and on paved roads in summer.

As the prior-art pneumatic tire using foam rubber on the tread, a so-called block pattern such that the tread is formed with blocks partitioned by circumferential and lateral grooves or a so-called lug pattern such that the tread is formed with lateral grooves has been well known. These prior-art pneumatic tires are provided with certain tire performance on icy and snowy roads in winter season. However, there still exists a problem in that since circumferential driving forces, circumferential braking forces and lateral forces are repeatedly applied to both tread side areas during travelling, and therefore dynamic strains are repeatedly concentrated at groove bottoms of the foam rubber, cracks are produced at groove bottoms.

Attention is drawn to the disclosure of DE-A-3703480, which corresponds to the preamble of claim 1.

The present invention aims to provide a pneumatic tire having a tread improved in various tire performance required for both winter and summer, by making the best use of foam rubber which can improve various performance on icy and snowy roads, while preventing crack generation at groove bottoms on both tread side areas.

The present invention provides a pneumatic tire having a tread portion composed of at least two rubber layers comprising a radially outward arranged outer rubber layer made of foam rubber the foam rate of which is 5 to 50% and the volume ratio of which with respect to said tread portion is at least 10%, and a radially inward arranged inner rubber layer having a Shore A hardness of 54 to 80 degrees which is higher than that of the outer rubber layer , and tread side portions with side rubbers having antibending and anticutting performance for covering both sides of the tread portion, and formed with a plurality of lateral grooves, a plurality of circumferential grooves, and a plurality block-shaped land portions defined by said lateral grooves and circumferential grooves and each of the land portions having laterally extending sipes, characterized in that each of said side rubbers is made of rubber including no foaming agent and extends from the side of the tread into the said lateral grooves to cover the lateral groove bottoms; at the lateral groove bottoms covered by said side rubbers, wedge-shaped portions of said outer foam rubber layer having a reduced foam rate are formed between said side rubber and said inner rubber layer); and said sipes on said land portions extend through said outer rubber layer into said inner rubber layer.

Further, it is preferable to effectively distribute the foam rubber in the outer rubber layer of the tread portion in such a way that a foam rate $V_A$ of the foam rubber at both side areas of the outer rubber layer is smaller than that $V_B$ of the foam rubber at the central area partitioned by a boundary surface parallel to an equatorial plane E from the side area. The boundary surface can alternatively be inclined deep in cross section from near the tire shoulder portion toward the center of the tread.

Further, it is preferable that a thickness $D_{3A}$ of the outer rubber layer at the center of a groove bottom of the lateral groove is from 70 to 10 % of a thickness $D_3$ between a groove bottom surface and a belt layer.

Further, it is preferable that a thickness $D_L$ of the outer rubber layer at a land portion between the tire surface and a boundary line L is from 15 to 85% of a depth $D_{10}$ of a main groove. Furthermore, the outer rubber layer is preferably covered by a cover layer having a thickness of 0.3 to 0.4 mm and made of an ordinary rubber.

In the pneumatic tire according to the present invention, since the tread portion is composed of an outer foam rubber layer and an inner ordinary layer, the hardness of the inner rubber layer is higher than that of the outer rubber layer, so that it is possible to reduce a change in groove width after vulcanization. In addition, since the foam rate of the foam rubber at both side areas of the outer rubber layer is determined to be smaller than that of the foam rubber at the central area, it is possible to increase the rigidity of the tire shoulder portions or the lateral grooves, so that change in groove width after vulcanization can be reduced and further dynamic strain concentration during travelling can be reduced.

In summary, the outer foam rubber layer is effective to improve tire performance on icy and snowy roads in winter, and the inner ordinary rubber layer is effective to reduce change in groove width after vulcanization, that is to prevent the radius of curvature of lateral groove bottoms from being reduced after vulcanization. Since the groove width in lateral grooves formed on both tire shoulder portions is not reduced, it is possible to reduce dynamic strain concentration in the lateral grooves and therefore to reduce

EP 0 337 787 B1

crack generation at the lateral groove bottoms.

The invention will be further described, by way of example only, with reference to the accompanying drawings, in which:

Fig. 1 is a plan view showing a tread pattern of a first embodiment of a pneumatic tire according to the present invention;

Fig. 2 is a cross-sectional view taken along the line II-II in Fig. 1;

Fig. 3 is an enlarged cross-sectional view showing the essential portion of the pneumatic tire shown in Fig. 2;

Fig. 4 is an enlarged cross-sectional view showing the essential portion of another modification of the pneumatic tire shown in Fig. 3;

Fig. 5 is a cross-sectional view of a second embodiment of the pneumatic tire according to the present invention;

Fig. 6 is an enlarged cross-sectional view of a third embodiment of the pneumatic tire according to the present invention;

Fig. 7 is an enlarged cross-sectional view of a fourth embodiment of the pneumatic tire according to the present invention;

Fig. 8 is an enlarged cross-sectional view for assistance in explaining the limitation of the outer rubber layer range of the fourth embodiment shown in Fig. 7;

Fig. 9 is a graphical representation showing the relationship between the number of bubbles and the tire thickness;

Fig. 10 is an enlarged cross-sectional view showing a fifth embodiment of the pneumatic tire according to the present invention;

Fig. 11 is an enlarged cross-sectional view showing a sixth embodiment of the pneumatic tire according to the present invention; and

Fig. 12 is a cross-sectional view showing a seventh embodiment of the pneumatic tire according to the present invention.

The inventors have studied pneumatic tires having a foam rubber tread from the standpoints of the dynamic status of grooves during both manufacturing and travelling, in particular the status of groove bottoms on both the tread side areas, and found the following results:

(1) In the tires having a foam rubber tread, the width of grooves is much narrowed after having been vulcanized as compared with the tires having an ordinary rubber tread (no foaming agent is included in the rubber). This is because after the tire has been vulcanized and therefore vulcanizing pressure is reduced within a vulcanizing mold, the foam rubber expands to deform the tread in such a way that the groove width is narrowed. As a result, the radius of curvature at the groove bottom tends to be reduced.

(2) Since the rigidity of the foam rubber tread is relatively small, dynamic strains produced at the tread tend to increase during travelling under load, in particular on both tread side areas, that is, at lateral grooves formed near the tire shoulder portions.

(3) Since the strength of foam rubber is smaller than that of the ordinary rubber including no foaming agent, cracks are easily produced in foam rubber. The present invention aims to solve the above-mentioned problems advantageously.

The pneumatic tire according to the present invention has a tread portion composed of at least two rubber layers comprised of a radially outward arranged outer rubber layer and a radially inward arranged inner rubber layer and tread side portions with side rubbers for covering both sides of the tread surface portion and formed with a plurality of lateral grooves extending in the tread crossing direction at least on both sides of the tread portion and arranged at regular intervals in the circumferential direction of the tire; Shore A hardness of the inner rubber layer is from 54 to 80 degrees and is higher than that of the outer rubber layer; and the outer rubber layer is made of foam rubber whose foam rate is from 5 to 50% and whose volume ratio with respect to the volume of the tread is at least 10%.

Here, the reason why the tread portion is composed of at least two outer and inner tread rubber layers is as follows: In general, although a foam rubber is used for the tread to improve various tire performance on icy and snowy roads in winter, after the vulcanizing pressure is removed, the foam rubber expands and therefore the lateral groove width is deformed smaller so that the radius of curvature at the lateral groove bottom is reduced. However, it is possible to reduce a change in groove width by forming the inner tread layer of rubber with specific physical properties. The rubber used for the inner tread layer is the ordinary rubber or a foam rubber with a foam rate smaller than that of the outer tread layer and a Shore A hardness (54 to 80 degrees) higher than that of the outer tread layer. Further, when the hardness is less than 54 degrees, the effect of reducing the groove width deformation is small; when the hardness is more than 80 degrees, the tire performance on icy and snowy roads is deteriorated.

3

Further, the outer foam rubber layer has a volume at least 10% or more of the total tread volume, more preferably 10 to 70% and most preferably 40 to 60%. The reason why the outer tread layer volume is determined to be at least 10% or more of the entire tread volume is that if less than 10%, the tire performance on icy and snowy roads cannot be improved effectively.

Further, Shore A hardness of the outer rubber layer is preferably from 35 to 53 degrees. The foam rate V of foam rubber is calculated by the following formula:

$$V = ( \rho_0 / \rho_1 - 1) \times 100 \ (\%) \qquad (1)$$

where $\rho_0$ is the density (g/cm$^3$) of solid portion of foam rubber; $\rho_1$ is the density of foam rubber. The foam rate V of the outer rubber layer is from 5 to 50%, and preferably 5 to 30%. The reason why the foam rate V is determined to be from 5 to 50% is that if less than 5%, it is impossible to obtain softness of foam rubber at low temperature and if more than 50%, it is impossible to obtain practically sufficient wear resistance on dry roads (other than icy and snowy roads and wet roads).

Further, the average independent bubble diameter of foam rubber is preferably 5 to 150 $\mu$m, more preferably 10 to 100 $\mu$m. The reason why the average bubble diameter is determined to be 5 to 150 $\mu$m is that if less than 5 $\mu$m, the tire performance on icy and snowy roads is not improved and if more than 150 $\mu$m, wear resistance is reduced markedly and further deformation restoration force of the foam rubber (e.g. antideformation) is reduced markedly, thus resulting in tire block deformation and sipe clogging during travelling due to tire permanent set in fatigue and therefore lower tire performance on icy and snowy roads. In addition, if more than 150 $\mu$m, it is impossible to obtain a stable tire shape in manufacturing process since the anticutting performance is lowered and the blocks are easily broken off.

Further, it is preferable that the foam rubber includes 20 or more 30 to 120 $\mu$m diameter independent bubbles per unit area of 1 mm$^2$ at the central area of the outer rubber layer, and the number of bubbles is more preferably 30 or more.

Furthermore, the foam rubber used for the tread of the pneumatic tire according to the present invention is formed by adding a foaming agent to an ordinary rubber composition and by heating it under pressure in accordance with the ordinary tire manufacturing process. The foaming agent is suitably dinitropentamethylene-tetraamine, benzenesulfonylehydrazide, high boiling-point hydrocarbon compound (resin microcapsule).

Embodiments of the present invention will be explained hereinbelow with reference to the accompanying drawings. Tests of foam rubber properties and test tire performance have been made in accordance with the following methods:

Test methods

(1) Average bubble diameter and foam rate V

To obtain an average bubble diameter, block-shaped test samples were cut away from the foam rubber layer of the tread of test tires; pictures of the sample cross sections were taken by an optical microscope of 100 to 400 magnifying power; and the diameter of 200 and more independent bubbles were measured and averaged as an arithmetical mean.

To obtain a foam rate V of foam rubber, the block-shaped test sample was sliced into thin pieces with thickness of 2 $\mu$m; the sliced test pieces were aged for stabilization for one week after vulcanization to measure the density $\rho_1$ (g/cm$^3$). On the other hand, the density $\rho_0$ of the non-foam rubber tread (solid phase rubber) was measured; and the foam rate V was calculated in accordance with the formula (1).

(2) Independent bubble diameter and the number of bubbles

To obtain independent bubble diameters and the number of bubbles, block-shaped test samples were cut away from the foam rubber layer of the tread of test tires; pictures of the sample cross sections were taken by an optical microscope of 100 to 400 magnification power. Therefore, the number of 5 $\mu$m or more diameter independent bubbles was measured over an area of 4mm$^2$ or more to obtain the number of independent bubbles per unit area (1mm$^2$).

(3) Dynamic elastic modulus of foam rubber

Rectangular samples (4.6mm in width, 30mm in length and 2mm in thickness) were cut away from the foam rubber layer of the tread of test tires; and the elastic modulus was measured by a dynamic elastic modulus meter (Iwamoto Seisakusho) at temperature $30^0$C, at frequency 60 $H_z$ and at amplitude strain 1%.

(4) Steerability

The test tires were attached to an ordinary cornering performance test machine installed in a room and cornering powers were measured by applying a load of 395 kg to the test tires. The indices are indicated with the performance of the ordinary rubber tread tire as 100. The larger the indices are, the better will be the performance.

(5) Braking ability on ice

Four test tires were attached to a 1800cc passenger car, and braking distances were measured on ice at ambient temperature -5ºC. The indices are indicated with the performance of the ordinary rubber tread tire as 100. The larger the indices are, the better will be the braking performance.

(6) Climbing ability on snow

Four test tires were attached to a 1800cc passenger car, and the climbing times necessary to travel a distance 50m were measured at a slope with a gradient of 7% at ambient temperature -5ºC. The indices are indicated with the performance of the ordinary rubber tread tire as 100. The larger the indices are, the better will be the climbing performance.

(7) Riding comfortability

The test tires were attached to a fixed shaft of an ordinary projection override vibration test machine installed in a room, and variation in shaft load measured when the tires overrode the projections under load of 395kg. The indices are indicated with the performance of the ordinary rubber tread tire as 100. The larger the indices are, the better will be the riding comfortability.

(8) Road noise performance

Four test tires were attached to a 1800cc passenger car, and sound pressure was measured by a road noise meter when the car was travelling on a specified road noise test road.

(9) Wear resistance

Four test tires were attached to a 1800cc passenger car, and changes in groove depth were measured after the car had travelled 10,000km on public roads. The indices are indicated with the wear resistance of the ordinary rubber tread tire as 100. The larger the indices are, the better will be the wear resistance.

(10) Anticrack performance at sipes and groove bottoms

Four test tires were attached to a 1800cc passenger car, and the occurrences of sipe bottom cracks and groove bottom cracks were observed after the car had travelled 20,000km on public roads.

Embodiments of the present invention will be described with reference to the attached drawings.

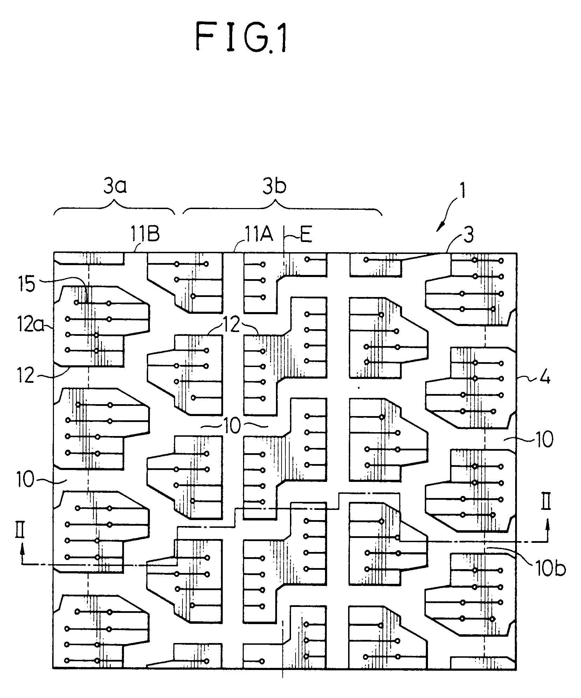

Figs. 1 to 3 show a first embodiment of the pneumatic tire according to the present invention.

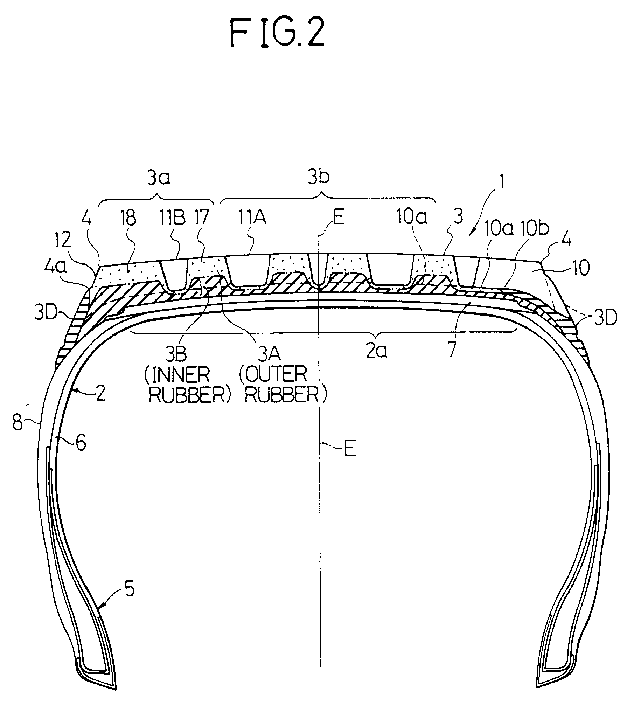

In Figs. 1 and 2, a pneumatic tire (tire size: 165 SR13) 1 includes a tire case 2, and a tread portion 3 covering a crown portion 2a of the case 2 between two shoulder portions 4. The case 2 comprises a pair of bead portions 5, a carcass 6 made of rubber coated cords arranged substantially in the tire radial direction between the two bead portions 5, and a belt layer 7 arranged substantially in the tire circumferential direction outside the crown portion 2a of the carcass 6.

Further, side walls 8 are formed on both the axially outsides of the carcass 6 of the case 2.

The tread portion 3 is composed of an outer rubber layer 3A arranged radially outward so as to be in contact with road surface and an inner rubber layer 3B arranged radially inward, and side rubber portions 3D for covering both the sides of the tread portion 3.

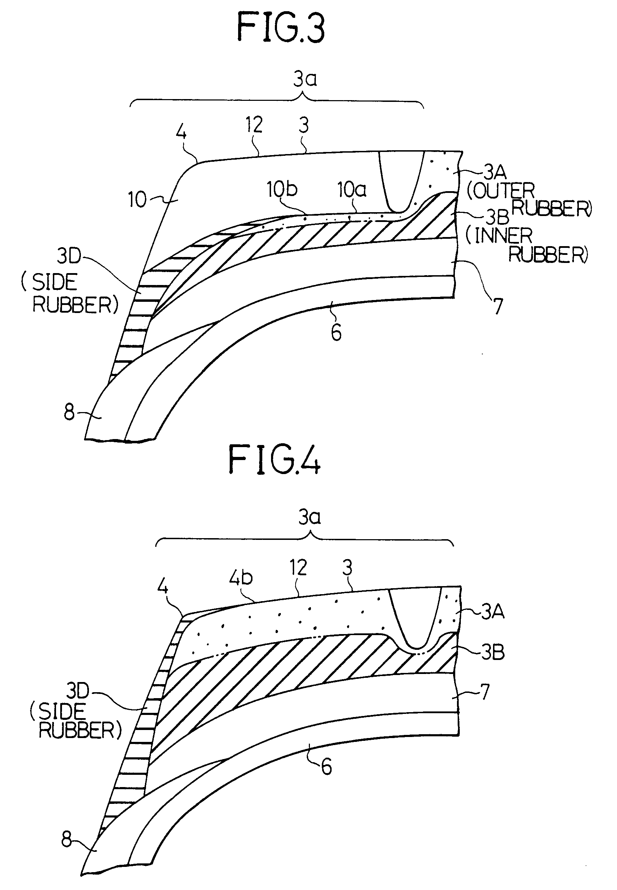

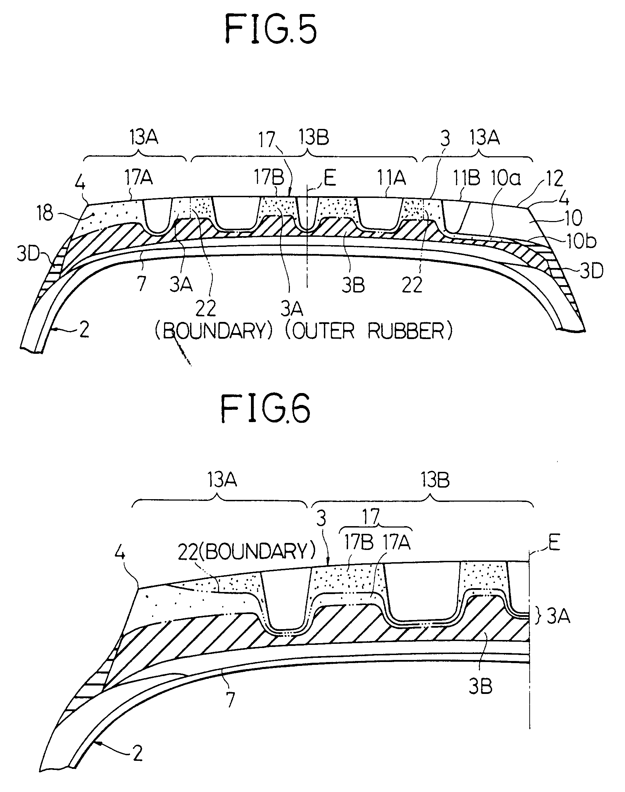

In this first embodiment, the side rubber portion 3D is ordinary rubber including no foaming agent and, as shown in Figs. 2 and 3, covers the tread portion 3 to a position 4a on the side wall 8 or a position 10b of a bottom of lateral groove 10. Further, it is also possible to design the side rubber portion 3D so as to cover the shoulder portion 4 to an axially outside part 4b of the tread portion 3 as shown in Fig. 4. The above tread portion 3 can be manufactured by simultaneously extruding three rubbers of outer rubber layer; the inner rubber layer 3B and two relatively thin side rubber portions 3D from an extrusion machine into a trapezoidal (in cross section) shape in multilayer state or by separately extruding three rubber layers into three pieces of sheet, separately before bonding these rubbers.

The volume $V_{3A}$ of the outer rubber layer 3A is 60% of the total volume V of the tread 3. The tread 3 is formed with a plurality of lateral grooves 10 extending in the lateral direction of the tread 3 and arranged with approximately regular intervals in the tire circumferential direction at both side areas 3a and the central area 3b.

Further, the tread portion 3 is formed with two straight circumferential grooves 11A at the central area 3b and two zigzag circumferential grooves 11B at both the side areas 3a so as to form block-shaped land portions 12. Sipes 15 are formed in the tire lateral direction on the land portion 12.

In this embodiment, the outer rubber layer 3A of the tread portion 3 is made of a foam rubber 17 having a foam rate V = 22% and composition 1 as shown Table 1.

The foam rubber 17 is $5.0 \times 10^7$ dyn/cm$^2$ in dynamic elastic modulus and Hd = 46 in Shore A hardness. Further, the inner rubber layer 3B is made of an ordinary rubber having composition 2 as shown in Table 1. The ordinary rubber is $10 \times 10^7$ dyn/cm$^2$ in dynamic elastic modulus and Hd = 60 in Shore A hardness (both higher than those of the outer rubber). The side walls 8 are an ordinary side wall rubber excellent in antibending performance. Further, the side rubber portions 3D are the ordinary rubber whose foam rate V is smaller than that of the outer rubber layer (i.e. excellent in antibendability and anticutting performance). In this embodiment, in practice, the side rubber portions 3D are made of the ordinary rubber of zero foam rate.

The foam rubber 17 of the rubber composition 1 as shown in Table 1 includes rubber components composed of polymer whose glass transition temperature is -60°C or lower (e.g. natural rubber whose glass transition temperature is -72°C), styrene butadiene rubber whose glass transition temperature is -73°C, and polybutadiene rubber whose glass transition temperature is -100°C and mixed with an ordinary compounding agent and foaming agent (dinitropentamethylene-tetraamine and urea).

The tires are formed, heated, pressurized, vulcanized and depressurized within a vulcanizing mold in accordance with the ordinary tire manufacturing method. The foam rubber includes independent bubbles (shown by black points in the drawing) 18 when expanded.

Table 1

| | Composition 1 | Composition 2 | Composition 3 |
|---|---|---|---|
| Rubber Material | Outer rubber layer(Foam rubber) | Inner rubber layer(Ordinary rubber) | Ice compound |
| Natural rubber | 45 | 40 | 45 |
| Styrene butadiene rubber | 20 | 30 | 20 |
| Polybutadiene rubber | 35 | 20 | 35 |
| Carbon black | 75 | 80 | 75 |
| Process oil | 15 | 30 | 15 |
| Low temp. Softener (Part) | 0 | 0 | 30 |
| Stearic acid | 3.0 | 3.0 | 3.0 |
| Wax | 1.0 | 1.0 | 1.0 |
| Age resistor | 1.5 | 1.5 | 1.5 |
| Zinc white | 3.5 | 3.5 | 3.5 |
| Vulcanizing accelerator | 1.5 | 1.5 | 1.5 |
| Sulfur | 1.8 | 1.8 | 1.8 |
| Foaming agent: DPT *1 | 2.5 | – | – |
| Assistant:Urea | 2.5 | – | – |
| Foam rate V(%) | 22 | – | – |
| Average bubble diameter ($\mu$m) | 32 | – | – |
| Number of bubbles (pieces/mm$^2$) | 84 | – | – |
| Dynamic elastic modulus E' ($\times 10^2$ dyn/cm$^2$)*2 | 5.0 | 10 | 5.2 |
| Hardness Hd ($^0$) | 46 | 60 | 53 |

*1: Dinitropentamethylene-tetraamine  *2: Physical property of rubber itself after vulcanization

The foam rubber 17 (Composition 1) used for the embodiment is 22% in foam rate V, and has independent bubbles whose average diameter is 32 um and 84 independent bubbles whose diameters are from 30 to 200 $\mu$m per unit area 1mm². The construction and the manufacturing method of those components other than the tread 3 are the same as in the ordinary pneumatic tires, and therefore description thereof is omitted herein.

7

In the manufacturing process, as already described, three rubbers comprised of outer rubber layer 3A, inner rubber layer 3B and two relatively thin side rubber portions 3D are extruded into a trapezoidal shape in multilayer state as a green tread. During the vulcanization process, since the side rubber portions 3D for covering both the sides of the multilayer tread are pushed by projections which form lateral grooves of a vulcanizing mold, the side rubber portions 3D are so arranged as to cover the groove bottoms 10a of the lateral groove 10 to a position 10b as shown in Fig. 3. Under these rubber formation conditions, since the foam rate V decreases (e.g. down to 5% in this embodiment) at both the side areas of the outer rubber layer 3A (shown in Figs. 2 to 4), in particular at the wedge-shaped portions extending from the side rubber portions 3D, it is possible to prevent strains from being concentrated at the groove bottoms 10a and therefore cracks from being produced.

Fig. 5 shows a second embodiment of the present invention. In this embodiment, foam rubber is effectively distributed on the outer rubber layer 3A of the tread portion 3 in such a way that the foam rate $V_A$ (15%) of the foam rubber 17A at both side areas 13A (each of which corresponds to 5 to 25% of the tread width) of the outer rubber layer 3A is smaller than that $V_B$ (22%) of the foam rubber 17B at the central area 13B partitioned by a boundary 22 parallel to an equatorial plane E from the side area 13A. The Side rubber portions 3D are ordinary rubber which covers both sides of the tread portion 3. The portions other than the above are the same as in the first embodiment.

The rubber composition of the foam rubber 17A is the same as composition 1 shown in Table 1 except the foaming agent (DPT) of 2.0 and assistant (urea) of 2.0. The physical properties of this foam rubber is 15% in foam rate V, 30 $\mu$m in average bubble diameter, 62 pieces in the number of independent bubbles, 5.4 x 10 dyn/cm$^2$ in dynamic elastic modulus, and 47 degrees in hardness. The composition of the foam rubber 17B is the same as the composition 1.

In the second embodiment shown in Fig. 5, since both the sides of the tread are covered by the side rubber portions 3D and further the foam rate $V_A$ of the outer rubber layer 3A on both the side areas 13A is smaller (higher in rigidity) than that $V_B$ at the central area 13B, it is possible to increase the rigidity of the land portions 12 and to further increase the rigidity of the shoulder portions 4. In addition, it is possible to reduce change in lateral groove width due to expansive deformation after vulcanization. Therefore, the movement of the land portion 12 is small even if a large traction is applied to the tire during travelling under load. Further, it is possible to markedly reduce the strains generated at groove bottoms 10a of the lateral grooves 10 and the main circumferential grooves 11A and 11B, that is to prevent the strains from being concentrated. Therefore, it is possible to prevent the occurrence of cracks at the groove bottoms 10a of the lateral grooves 10 and the main grooves 11.

Further, the second embodiment has been explained for the case where the boundary 22 is parallel to the equatorial plane E. However, the present embodiment can be applied to the case where the boundary 22 is inclined in cross section toward the right or the left with respect to the equatorial plane E.

Fig. 6 shows a third embodiment of the present invention.

In this third embodiment, being different from the second embodiment shown in Fig. 5, the boundary surface 22 of the second embodiment is inclined deep in cross section from near the shoulder portion 4 to the center of the tread 3.

In the above-mentioned second and third embodiments of the present invention, the thickness of the outer rubber layer is approximately the same in cross section at both the side areas and the central area. However, in the present invention, it is also possible to gradually decrease the thickness of the outer foam rubber layer from the central area to both the side areas or near the shoulder portion and instead to gradually increase the thickness of the inner ordinary rubber layer (including no foam rubber) in the same direction.

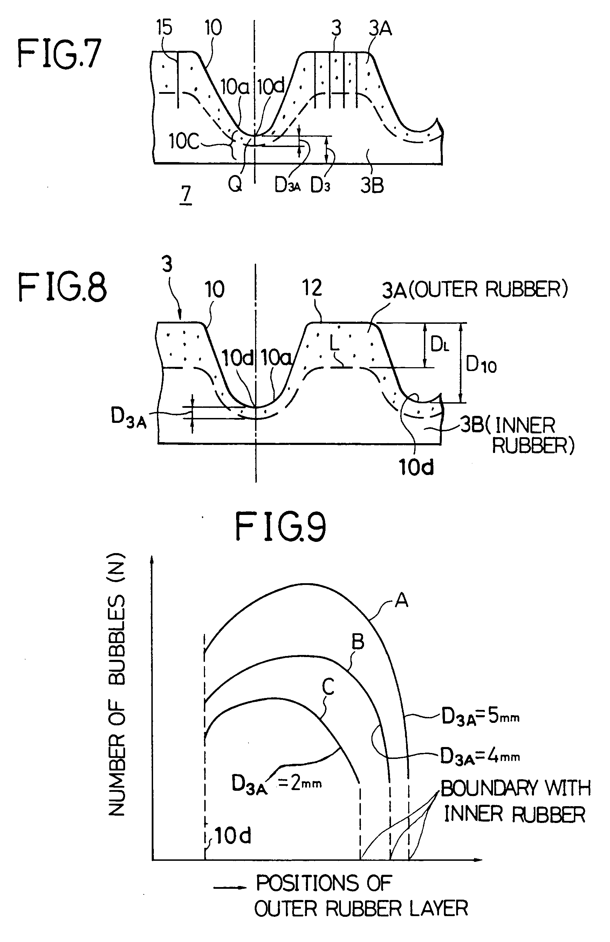

Fig. 7 shows a fourth embodiment, in which the thickness $D_{3A}$ of the outer rubber layer 3A at the center of the groove bottom 10c of the lateral groove 10 is 70 to 10% of a thickness $D_3$ between the lateral groove bottom surface 10d and the belt layer 7, and more preferably 50 to 30% thereof. The reason why the thickness of the outer rubber layer is defined at the groove bottom will be described hereinbelow with reference to Figs. 8 and 9.

In a groove 10 which partitions a land portion 12 of the tread portion 3, the number N of bubbles per unit tire cross-sectional area at the groove bottom 10a of the outer foam rubber layer 3A changes, as shown in Fig. 9, along the groove central line from the groove bottom surface 10d in the thickness direction of the outer rubber layer 3A. In more detail, the number N of bubbles in the outer rubber layer 3A decreases near the groove bottom surface 10d and near the boundary between the outer and inner rubber layers 3A and 3B but increases at the middle portion of the outer rubber layer 3A. Further, Fig. 9 indicates that the number N of bubbles in the outer rubber layer 3A decreases, as the thickness $D_{3A}$ of the outer rubber layer 3A along the groove central line decreases from a curved line A ($D_{3A}$ = 5 mm), B ($D_{3A}$ = 4 mm), to C ($D_{3A}$ = 2 mm). In this case, the number of bubbles in the outer rubber layer 3A at the land portion is substantially constant in the thickness direction of the outer rubber layer 3A. As described above, when the thickness $D_{3A}$ of the outer rubber layer 3A is reduced at the groove bottom into a predetermined range, it is possible to reduce the number of bubbles in the outer rubber layer and therefore to increase the strength of the groove bottoms.

In the fourth embodiment shown in Fig. 7, when the foam rate V of the outer rubber layer at the land portion was 22% and the thickness ratio $D_{3A}/D_3$ of the outer and total thickness at the groove bottom portion was 36% ( 0.8mm), the foam rate V of the outer rubber layer at the middle portion thereof along the central line of the groove bottom portion was 15%. Further, when the thickness ratio $D_{3A}/D_3$ lies in a range from 70 to 10%, the thickness $D_L$ of the outer rubber layer 3A at the land portion 12 (a distance between the tire surface and the boundary line L) is 15 to 85 % of the depth $D_{10}$ of the groove, and more preferably 30 to 70 % thereof.

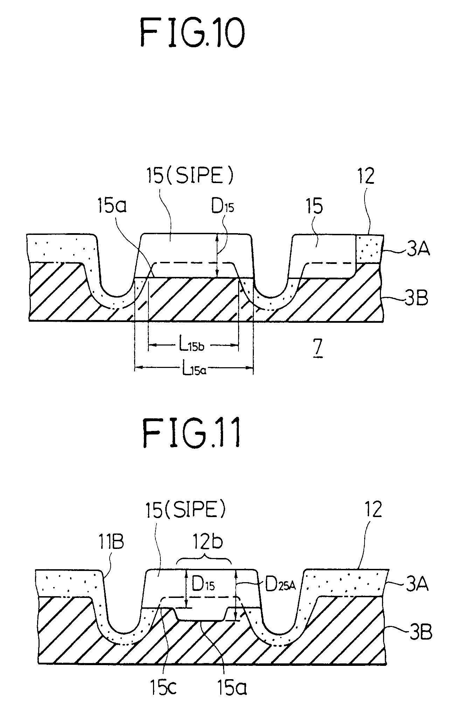

Fig. 10 shows a fifth embodiment, in which sipes (or incisions) 15 (also shown in Fig. 1) formed in the tread extend beyond the major part of the outer rubber layer 3A in the groove depth direction and further into the inner rubber layer 3B. In Fig. 10, the depth $D_{15}$ of the sipes 15 is uniform over the entire length $L_{15a}$, and extends into the inner rubber layer 3B at a partial length $L_{15b}$ of the land portion 12 at the middle thereof.

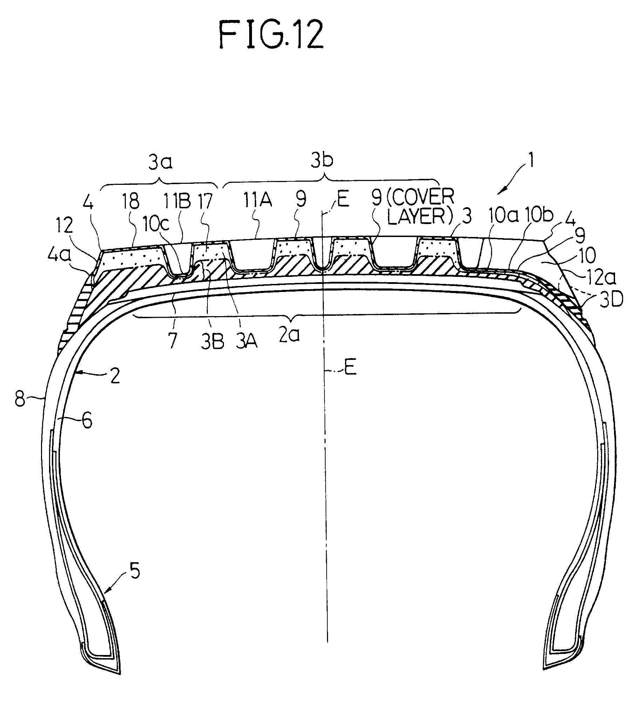

Fig. 11 shows a sixth embodiment, in which the depth $D_{25A}$ of the sipe 15 at the middle portion 15a of the land portion is deeper than that $D_{15}$ of the sipe 15 on both sides 15c of the land portion 12. The width of the sipe is up to 3 mm, and preferably 0.3 to 1.5 mm.

Further, it is possible to consider various forms of sipes such as sipes each of whose both ends are open to the grooves as shown in Figs. 10 and 11; sipes each of whose one end is open to the groove and each of whose other end is closed as shown in Fig. 1; sipes each of whose both ends are closed; straight sipes, zigzag sipes, wave-shaped sipes, etc. In this connection, a number of small circles described at one end and the middle portion of each of sipes (shown in Fig. 1) are holes connected to sipes and extending in the same depth direction as the sipes.

Fig. 12 shows a seventh embodiment, in which the outer rubber layer 3A is entirely covered by a cover layer 9. This cover layer 9 is a thin ordinary rubber layer (not a foam rubber layer) with a thickness of 1 mm or less, more preferably 0.3 to 0.5 mm. When the outer foam rubber layer 3A is covered by the cover layer 9, it is possible to effectively reinforce the lateral groove bottoms 10b and 10c and therefore prevent crack generation thereat. Further, it is also possible to cover only the groove bottoms of specific grooves, so far as circumstances permit, by the covering layer 9.

The effects of the present invention have been verified by use of test tires of three kinds as follows:

The test tires of ordinary structure (165 SR 13 size) were used for comparison tests as shown in Table 2. The invention tires were formed with a tread as shown in Figs. 1 and 2, and the comparison tires 1 and 2 were formed with a tread as shown in Fig. 1 (the groove dimensions were the same as in the invention tires). On the other hand, the tread rubber material of the invention tires was compositions 1 and 2 shown in Table 1; that of the comparison tires was composition 3 (ice compound) shown in Table 1; and that of the comparison tires was composition 1 (foam rubber) shown in Table 1 in only the tread surface portion.

The comparison tires 1 and 2 were basically the same as the invention tire except the above.

Tests have been effected in accordance with the above-mentioned test methods with respect to steerability, braking ability on ice, climbing ability on snow, riding comfortability, road noise performance, wear resistance and anticrack performance at groove bottoms.

EP 0 337 787 B1

Table 2

|  | Comparison 1 | Comparison 2 | Invention |
|---|---|---|---|
| Rubber kinds | Ice compound | Foam rubber | Foam rubber and ordinary rubber |
| Tread structure | Single rubber layer | Single rubber layer | Double rubber layers |
| Steerability | 100 | 85 | 97 |
| Braking ability on ice | 100 | 110 | 110 |
| Climbing ability on snow | 100 | 108 | 110 |
| Riding Comfortability | 100 | 110 | 107 |
| Road noise | | 1dB(A)less than Comparison 1 | 1dB(A)less than Comparison 1 |
| Antiabrasion | 100 | 85 | 100 |
| Anticrack at groove bottoms | No crack | Many cracks | No crack |

The test results are shown with the indices of the comparison 1 as 100 in Table 2. The tires of the present invention have less crack occurrence at groove bottoms as compared with the comparison tires 1 and 2, thus improving the tire performance markedly. That is, it is possible to markedly improve the tire performance during travelling in winter, while maintaining tire performance during travelling in summer.

As described above, according to the present invention, it is possible to prevent crack occurrence at groove bottoms on both the side areas of the tread, that is to markedly improve the tire durability by making the best use of foam rubber which can improve the tire performance on icy and snowy roads in particular, while improving and maintaining tire performance in both winter and summer.

**Claims**

1. A pneumatic tire having a tread portion (3) composed of at least two rubber layers comprising a radially outward arranged outer rubber layer (3A) made of foam rubber the foam rate of which is 5 to 50% and the volume ratio of which with respect to said tread portion is at least 10%, and a radially inward arranged inner rubber layer (3B) having a Shore A hardness of 54 to 80 degrees which is higher than that of the outer rubber layer (3A), and tread side portions with side rubbers (3D) having antibending and anticutting performance for covering both sides of the tread portion (3), and formed with a plurality of lateral grooves (10), a plurality of circumferential grooves (11A, 11B), and a plurality block-shaped land portions (12) defined by said lateral grooves and circumferential grooves and each of the land portions having laterally extending sipes (15), characterized in that each of said side rubbers (3D) is made of rubber including no foaming agent and extends from the side of the tread (3) into the said lateral grooves (10) to cover the lateral groove bottoms; at the lateral groove bottoms covered by said side rubbers, wedge-shaped portions of said outer foam rubber layer (3A) having a reduced foam rate are formed between said side rubber (3D) and said inner rubber layer (3B); and said sipes (15) on said land portions extend through said outer rubber layer (3A) into said inner rubber layer (3B).

2. A pneumatic tire as claimed in claim 1, characterized in that the volume ratio of the outer rubber layer (3A) with respect to the volume of the tread is from 10 to 70%, preferably 40 to 60%.

3. A pneumatic tire as claimed in claim 1 or 2, characterized in that hardness of the outer rubber layer (3A) is from 35 to 53 degrees.

4. A pneumatic tire as claimed in any of claims 1 to 3, characterized in that the foam rate of the outer rubber (3A) layer is from 5 to 30%.

5. A pneumatic tire as claimed in any of claims 1 to 4, characterized in that an average bubble diameter of the outer foam rubber layer is from 5 to 150 $\mu$m, preferably from 10 to 100 $\mu$m.

10

6.  A pneumatic tire as claimed in any of claims 1 to 5, characterized in that the number of 30 to 120 $\mu$m diameter bubbles per unit area of 1 mm$^2$ in the outer foam rubber layer is 20 or more, preferably 30 or more, at a central portion of tire land portions (12).

7.  A pneumatic tire as claimed in any of claims 1 to 6, characterized in that the foam rubber is distributed in the outer rubber layer (3A) of the tread portion (3) in such a way that a foam rate $V_A$ of the foam rubber (17A) at both side areas (13A) of the outer rubber layer (3A) is smaller than that $V_B$ of the foam rubber (17B) at the central area (13B) partitioned by a boundary surface (22) parallel to an equatorial plane E from the side area (13A) to increase rigidity of tire shoulder portions.

8.  A pneumatic tire as claimed in any of claims 1 to 6, characterized in that the foam rubber is distributed in the outer rubber layer (3A) of the tread portion (3) in such a way that a foam rate $V_A$ of the foam rubber (17A) at both side areas (13A) of the outer rubber layer (3A) is smaller than that $V_B$ of the foam rubber (17B) at the central area (13B) partitioned by a boundary surface (22) which is inclined deep in cross section from near the tire shoulder portion (4) toward a center of the tread (3).

9.  A pneumatic tire as claimed in any of claims 1 to 8, characterized in that a thickness $D_{3A}$ of the outer rubber layer (3A) at a center of a groove bottom (10C) of the lateral groove (10) is from 70 to 10%, preferably from 50 to 30%, of a thickness $D_3$ between a groove bottom surface (10d) and a belt layer (7).

10. A pneumatic tire as claimed in any of claims 1 to 9, characterized in that a thickness $D_L$ of the outer rubber layer (3A) at a land portion (12) between the tire surface and a boundary line L is from 15 to 85%, preferably from 30 to 70%, of a depth $D_{10}$ of a groove (10).

11. A pneumatic tire as claimed in any of claims 1 to 10, characterized in that a depth $D_{15}$ of the sipe (15) is uniform over an entire length $L_{15a}$ and extends into the inner rubber layer (3B) at a partial length $L_{15b}$ of a land portion at the middle thereof.

12. A pneumatic tire as claimed in any of claims 1 to 10, characterized in that a depth $D_{25A}$ of the sipe (15) at a middle portion (15a) of the land portion is deeper than that $D_{15}$ of the sipes (15) on both sides (15c) of the land portion.

13. A pneumatic tire as claimed in any of claims 1 to 12, characterized in that the outer rubber layer (3A) is covered by a cover layer (9) having a thickness of 0.3 to 0.4 mm and made of an ordinary rubber.

14. A pneumatic tire as claimed in any of claims 1 to 12, characterized in that only groove bottoms (10a, 10b, 10c) of the outer rubber layer (3A) are covered by a cover layer (9) having a thickness of 0.3 to 0.4 mm and made of an ordinary rubber.

15. A pneumatic tire as claimed in any of claims 1 to 14, characterized in that reduced thickness portions of said outer rubber layer (3A) are formed between bottoms of the lateral grooves (10) and the inner rubber layer (3B), and the foam rate of the reduced thickness portions of the outer rubber layer (3A) is less than the foam rate of the outer rubber layer (3A) at land portions of the tread.

**Patentansprüche**

1.  Luftreifen, der einen Laufflächenbereich (3) hat, der aus mindestens zwei Gummischichten besteht, und zwar einer radial außen angeordneten, äußeren Gummischicht (3A), die aus Schaumgummi besteht, dessen Schaumanteil 5 bis 50% beträgt, und dessen Volumenverhältnis bezüglich des Laufflächenbereichs mindestens 10% beträgt, und einer radial innen angeordneten, inneren Gummischicht (3B), die eine Shore-A-Härte von 54 bis 80 Grad hat, die größer als diejenige der äußeren Gummischicht (3A) ist, und Laufflächen-Seitenbereiche hat, mit biege- und schneidfesten Seitengummis (3D) zum Bedecken beider Seiten des Laufflächenbereichs (3), und der mit einer Vielzahl von seitlichen Rillen (10), einer Vielzahl von Umfangsrillen (11A, 11B), und einer Vielzahl von blockförmigen Stollenbereichen (12) gebildet ist, die durch die seitlichen Rillen und die Umfangsrillen festgelegt sind, wobei jeder der Stollenbereiche sich seitlich erstreckende Einschnitte (15) hat, dadurch gekennzeichnet, daß jeder der Seitengummis (3D) aus Gummi besteht, der kein Schäummittel enthält, und sich von der Seite der Lauffläche (3) in die seitlichen Rillen (10) hinein erstreckt, um den Boden der seitlichen Rillen zu bedecken; daß auf dem Boden der seitlichen Rillen, der von den Seitengummis bedeckt ist, keilförmige Bereiche der äußeren Schaumgummischicht (3A), die einen verringerten Schaumanteil haben, zwischen dem Seitengummi (3D) und der inneren Gummischicht (3B) gebildet sind; und daß die Einschnitte (15) in den Stollenbereichen sich durch die äußere Gummischicht (3A) hindurch in die innere Gummischicht (3B) erstrecken.

2. Luftreifen gemäß Anspruch 1, dadurch gekennzeichnet, daß das Verhältnis des Volumens der äußeren Gummischicht (3A) zu dem Volumen der Lauffläche 10 bis 70%, vorzugsweise 40 bis 60% beträgt.

3. Luftreifen gemäß Anspruch 1 oder 2, dadurch gekennzeichnet, daß die Härte der äußeren Gummischicht (3A) 35 bis 53 Grad beträgt.

4. Luftreifen gemäß irgendeinem der Ansprüche 1 bis 3, dadurch gekennzeichnet, daß der Schaumanteil der äußeren Gummischicht (3A) 5 bis 30% beträgt.

5. Luftreifen gemäß irgendeinem der Ansprüche 1 bis 4, dadurch gekennzeichnet, daß der mittlere Blasendurchmesser der äußeren Schaumgummischicht 5 bis 150 $\mu$m, vorzugsweise 10 bis 100 $\mu$m beträgt.

6. Luftreifen gemäß irgendeinem der Ansprüche 1 bis 5, dadurch gekennzeichnet, daß die Anzahl der Blasen mit 30 bis 120 $\mu$m Durchmesser pro Flächeneinheit von 1 mm$^2$ in der äußeren Schaumgummi-schicht in einem mittleren Bereich der Reifenstollenbereiche (12) mindestens 20, vorzugsweise mindestens 30 beträgt.

7. Luftreifen gemäß irgendeinem der Ansprüche 1 bis 6, dadurch gekennzeichnet, daß der Schaumgummi in der äußeren Gummischicht (3A) des Laufflächenbereichs (3) so verteilt ist, daß ein Schaumanteil $V_A$ des Schaumgummis (17A) in den beiden Seitenzonen (13A) der äußeren Gummischicht (3A) kleiner als der Schaumanteil $V_B$ des Schaumgummis (17B) in der durch eine zu der Äquatorebene E parallele Grenzfläche (22) von der Seitenzone (13A) getrennten, mittleren Zone (13B) ist, um die Steifigkeit der Reifenschulterbereiche zu erhöhen.

8. Luftreifen gemäß irgendeinem der Ansprüche 1 bis 6, dadurch gekennzeichnet, daß der Schaumgummi in der äußeren Gummischicht (3A) des Laufflächenbereichs (3) so verteilt ist, daß der Schaumanteil $V_A$ des Schaumgummis (17A) in den beiden Seitenzonen (13A) der äußeren Gummischicht (3A) kleiner ist als der Schaumanteil $V_B$ des Schaumgummis (17B) in der mittleren Zone (13B), die durch eine Grenzfläche (22) getrennt ist, die im Querschnitt von nahe bei dem Reifenschulterbereich (4) zu der Mitte der Lauffläche (3) hin tief abfällt.

9. Luftreifen gemäß irgendeinem der Ansprüche 1 bis 8, dadurch gekennzeichnet, daß die Dicke $D_{3A}$ der äußeren Gummischicht (3A) in der Mitte des Rillenbodens (10c) der seitlichen Rille (10) 70 bis 10%. vorzugsweise 50 bis 30%, der Dicke $D_3$ zwischen der Rillenbodenoberfläche (10d) und der Gürtelschicht (7) beträgt.

10. Luftreifen gemäß irgendeinem der Ansprüche 1 bis 9, dadurch gekennzeichnet, daß die Dicke $D_L$ der äußeren Gummischicht (3A) bei einem Stollenbereich (12) zwischen der Reifenoberfläche und einer Grenzlinie L 15 bis 85%, vorzugsweise 30 bis 70%, der Tiefe $D_{10}$ einer Rille (10) beträgt.

11. Luftreifen gemäß irgendeinem der Ansprüche 1 bis 10, dadurch gekennzeichnet, daß die Tiefe $D_{15}$ des Einschnitts (15) über die ganze Länge $L_{15a}$ gleich groß ist und sich bei einer Teillänge $L_{15b}$ eines Stollenbereichs in der Mitte dieses Stollenbereichs in die innere Gummischicht (3B) erstreckt.

12. Luftreifen gemäß irgendeinem der Ansprüche 1 bis 10, dadurch gekennzeichnet, daß die Tiefe $D_{25A}$ des Einschnitts (15) in einem mittleren Bereich (15a) des Stollenbereichs größer als die Tiefe $D_{15}$ der Einschnitte (15) auf den beiden Seiten (15c) des Stollenbereichs ist.

13. Luftreifen gemäß irgendeinem der Ansprüche 1 bis 12, dadurch gekennzeichnet, daß die äußere Gummischicht (3A) von einer Deckschicht (9) bedeckt ist, die eine Dicke von 0.3 bis 0.4 mm hat und aus einem gewöhnlichen Gummi besteht.

14. Luftreifen gemäß irgendeinem der Ansprüche 1 bis 12, dadurch gekennzeichnet, daß nur die Rillenböden (10a, 10b, 10c) der äußeren Gummischicht (3A) von einer Deckschicht (9) bedeckt sind, die eine Dicke von 0,3 bis 0,4 mm hat und aus einem gewöhnlichen Gummi besteht.

15. Luftreifen gemäß irgendeinem der Ansprüche 1 bis 14, dadurch gekennzeichnet, daß Bereiche mit geringerer Dicke der äußeren Gummischicht (3A) zwischen dem Boden der seitlichen Rillen (10) und der inneren Gummischicht (3B) gebildet sind, und der Schaumanteil der Bereiche mit geringerer Dicke der äußeren Gummischicht (3A) kleiner als der Schaumanteil der äußeren Gummischicht (3A) bei den Stollenbereichen der Lauffläche ist.

## Revendications

1. Pneumatique possédant une partie de bande de roulement (3) composée d'au moins deux couches de caoutchouc comprenant une couche de caoutchouc externe agencée radialement à l'extérieur (3A), composée de caoutchouc mousse, avec un taux de mousse compris entre 5 et 50% et un rapport en volume par rapport à ladite partie de la bande de roulement d'au moins 10%, ainsi qu'une couche de caoutchouc interne agencée radialement à l'intérieur (38) avec une dureté Shore A comprise entre 54 et 80 degrés, supérieure à celle de la couche de caoutchouc externe (3A), ainsi que des parties latérales de la bande de roulement avec des gommes de flanc (3D), résistantes à la flexion et aux coupures, destinées à recouvrir les deux côtés de la partie de la bande de roulement (3), et comportant plusieurs rainures latérales (10), plusieurs rainures circonférentielles (11A, 11B) et plusieurs parties d'appui en forme de bloc (12), définies par lesdites rainures latérales et lesdites rainures circonférentielles, chacune des parties d'appui comportant des lamelles à extension latérale (15), caractérisé en ce que chacune desdites gommes de flanc (3D) est composée de caoutchouc n'englobant pas d'agent moussant et s'étend du côté de la bande de roulement (3) dans lesdites rainures latérales (10) pour recouvrir les fonds des rainures latérales; en ce qu'au niveau des fonds de rainures latérales recouverts par lesdites gommes de flanc des parties en forme de coin de ladite couche de caoutchouc mousse externe (3A), à taux de mousse réduit sont formées entre ladite gomme de flanc (3D) et ladite couche de caoutchouc interne (3B); et en ce que lesdites lamelles (15) sur lesdites parties d'appui s'étendent à travers ladite couche de caoutchouc externe (3A) dans ladite couche de caoutchouc interne (3B).

2. Pneumatique selon la revendication 1, caractérisé en ce que le rapport de volume entre la couche de caoutchouc externe (3A) et le volume de la bande de roulement est compris entre 10 et 70%, de préférence entre 40 et 60%.

3. Pneumatique selon les revendications 1 ou 2, caractérisé en ce que la dureté de la couche de caoutchouc externe (3A) est comprise entre 35 et 53 degrés.

4. Pneumatique selon l'une quelconque des revendications 1 à 3, caractérisé en ce que le taux de mousse de la couche de caoutchouc externe (3A) est compris entre 5 et 30%.

5. Pneumatique selon l'une quelconque des revendications 1 à 4, caractérisé en ce qu'un diamètre moyen des bulles de la couche de caoutchouc mousse externe est compris entre 5 et 150 $\mu$m, de préférence entre 10 et 100 $\mu$m.

6. Pneumatique selon l'une quelconque des revendications 1 à 5, caractérisé en ce que le nombre de bulles d'un diamètre compris entre 30 et 120 $\mu$m par unité de surface de 1 mm$^2$ dans la couche de caoutchouc mousse externe correspond à 20 ou plus, de préférence à 30 ou plus, au niveau d'une partie centrale des parties d'appui du pneumatique (12).

7. Pneumatique selon l'une quelconque des revendications 1 à 6, caractérisé en ce que le caoutchouc mousse est réparti dans la couche de caoutchouc externe (3A) de la partie de bande de roulement (3) de sorte qu'un taux de mousse $V_A$ du caoutchouc mousse (17A) au niveau des deux surfaces latérales (13A) de la couche de caoutchouc externe (3A) est inférieur au taux $V_B$ du caoutchouc mousse (17B) au niveau de la surface centrale (13B), divisée par une surface de délimitation (22) parallèle à un plan équatorial E à partir de la surface latérale (13A), pour accroître la rigidité des parties d'épaulement du pneumatique.

8. Pneumatique selon l'une quelconque des revendications 1 à 6, caractérisé en ce que le caoutchouc mousse est réparti dans la couche de caoutchouc externe (3A) de la partie de bande de roulement (3) de façon qu'un taux de mousse $V_A$ du caoutchouc mousse (17A) au niveau des deux surfaces latérales (13A) de la couche de caoutchouc externe (3A) est inférieur à un taux $V_B$ du caoutchouc mousse (17B) au niveau de la surface centrale (13B), divisée par une surface de délimitation (22) inclinée profondément en section d'un point proche de la partie d'épaulement du pneumatique (4) vers un centre de la bande de roulement (3).

9. Pneumatique selon l'une quelconque des revendications 1 à 8, caractérisé en ce qu'une épaisseur $D_{3A}$ de la couche de caoutchouc externe (3A) au niveau d'un centre d'un fond de rainure (10C) de la rainure latérale (10) représente entre 70 et 10%, de préférence entre 50 et 30% d'une épaisseur $D_3$ entre une surface du fond de la rainure (10d) et une couche de ceinture (7).

10. Pneumatique selon l'une quelconque des revendications 1 à 9, caractérisé en ce qu'une épaisseur $D_L$ de la couche de caoutchouc externe (3A) au niveau d'une partie d'appui (12) entre la surface du pneumatique et une ligne de délimitation L représente entre 15 et 85%, de préférence entre 30 et 70% d'une profondeur $D_{10}$ d'une rainure (10).

11. Pneumatique selon l'une quelconque des revendications 1 à 10, caractérisé en ce qu'une profondeur $D_{15}$ de la lamelle (15) est uniforme sur l'ensemble d'une longueur $L_{15a}$ et s'étend dans la couche de caoutchouc interne (3B) sur une longueur partielle $L_{15b}$ d'une partie d'appui au niveau du centre correspondant.

12. Pneumatique selon l'une quelconque des revendications 1 à 10, caractérisé en ce qu'une profondeur $D_{25A}$ de la lamelle (15) au niveau d'une partie médiane (15a) de la partie d'appui est plus grande qu'une profondeur $D_{15}$ des lamelles (154) sur les deux côtés (15c) de la partie d'appui.

13. Pneumatique selon l'une quelconque des revendications 1 à 12, caractérisé en ce que la couche de caoutchouc externe (3A) est recouverte par une couche de couverture (9) ayant une épaisseur comprise entre 0.3 et 0,4 mm et composée de caoutchouc ordinaire.

14. Pneumatique selon l'une quelconque des revendications 1 à 12, caractérisé en ce que ce sont uniquement les fonds de rainure (10a, 10b, 10c) de la couche de caoutchouc externe (3A) qui sont recouverts par une couche de couverture (9) ayant une épaisseur comprise entre 0,3 et 0,4 mm et composée de caoutchouc ordinaire.

15. Pneumatique selon l'une quelconque des revendications 1 à 14, caractérisé en ce que des parties d'épaisseur réduite de ladite couche de caoutchouc externe (3A) sont formées entre les fonds des rainures latérales (10) et la couche de caoutchouc interne (3B) et en ce que le taux de mousse des parties d'épaisseur réduite de la couche de caoutchouc externe (3A) est inférieur au taux de mousse de la couche de caoutchouc externe (3A) au niveau des parties d'appui de la bande de roulement.

14

# FIG.1

# FIG.2

# FIG.3

# FIG.4

# FIG.5

# FIG.6

FIG.7

FIG.8

FIG.9

NUMBER OF BUBBLES (N)

A

B

C

$D_{3A} = 5mm$

$D_{3A} = 4mm$

$D_{3A} = 2mm$

BOUNDARY WITH
INNER RUBBER

10d

⟶ POSITIONS OF
OUTER RUBBER LAYER

# FIG.10

15(SIPE)  12

15a  D₁₅  15

3A

3B

L₁₅ᵦ

L₁₅ₐ

7

# FIG.11

15(SIPE)  12

11B  12b

D₁₅  D₂₅ₐ

3A

3B

15c  15a

# FIG.12